# EUROPEAN PATENT APPLICATION

(11) **EP 2 930 413 A1**
(43) Date of publication of application: **14.10.2015**
(21) Application number: 13861360.9
(22) Date of filing: 18.11.2013
(51) Int. Cl.: F16L 59/06, B60R 13/08, C01B 33/03, F16L 59/02, F25D 23/08

(54) **HEAT-INSULATING MATERIAL AND MANUFACTURING PROCESS THEREFOR, AND INSULATION METHOD**

(30) Priority: 07.12.2012 JP 2012268261
(71) Applicant: Asahi Glass Company, Limited, Tokyo 100-8405 (JP)
(72) Inventor: SHINOHARA, Nobuhiro, Tokyo 100-8405 (JP); MIYAGAWA, Norihito, Tokyo 100-8405 (JP); SHIMIZU, Katsuhiko, Tokyo 100-8405 (JP); YABUNO, Tatsuya, Tokyo 100-8405 (JP)
(74) Representative: Müller-Boré & Partner Patentanwälte PartG mbB
(86) International application number: PCT/JP2013/081081
(87) International publication number: WO 2014/087834

(57) **Abstract**

There are provided an insulation panel and a process for performing thermal insulation by means of the insulation panel, which are capable of obtaining an excellent thermal insulating property, even in, e.g. a case where a space for filling an insulation panel is limited.

A insulation panel 1 including a rigid polyurethane foam 20 and a vacuum insulation panel 10 embedded in the rigid polyurethane foam 20; the vacuum insulation panel 10 including an outer sheath 16 having an airtight property, and a molded product 14 having a core material 12; the core material containing fumed silica (A) and fumed silica with a binder (A'), which has a binder applied to the surface of the fumed silica (A); the molded product 14 being decompressed and encapsulated in the outer sheath 16; and the rigid polyurethane foam 20 having open cells formed therein. A process for mounting the insulation panel 1 to a mounting surface.

## Description

### TECHNICAL FIELD

The present invention relates to an insulation panel, a process for manufacturing the same, and a process for performing thermal insulation.

### BACKGROUND ART

Insulation panels have been widely employed for the purpose of providing a house, a building and so on with high thermal insulation, providing an automobile door or roof with thermal shield, and employing thermal insulation to reduce the energy required for heating and cooling.

As such insulation panels, there have been known foamed products, such as urethane foams, and vacuum insulation panels wherein a core material made of perlite, silica or the like is decompressed and encapsulated in an outer sheath.

In a case where a space for filling an insulation panel is limited, such as a space between a door trim and a door frame of an automobile, it is, however, difficult to obtain an excellent thermal insulting property by means of a foamed product or a vacuum insulation panel in some cases. From this point of view, as an insulation panel having an improved thermal insulting property, an insulation panel with a vacuum insulation panel embedded in a rigid polyurethane foam has been proposed (Patent Document 1).

Further, there has been also known an insulation panel with a vacuum insulation panel integrated with a sound insulation panel or a sound absorbing panel (Patent Document 2).

### PRIOR ART DOCUMENTS

### PATENT DOCUMENTS

Patent Document 1: JP-A-10-114244
Patent Document 2: JP-A-2003-335185

### DISCLOSURE OF INVENTION

### TECHNICAL PROBLEM

A lot of energy-saving measures have been recently further demanded for the purpose of, e.g. a reduction in the load to the global environment, and it is desired that an insulation panel be provided so as to have a more excellent insulating property than the insulation panels as disclosed in Patent Documents 1 and 2.

It is an object of the present invention to provide an insulation panel, a process for manufacturing the same, and a process for performing thermal insulation, which are capable of obtaining an excellent thermal insulating property, even in, e.g. a case where a space for filling an insulation panel is limited.

### SOLUTION TO PROBLEM

The insulation panel according to the present invention includes a vacuum insulation panel and a rigid polyurethane foam brought into contact with at least one side of the vacuum insulation panel; the vacuum insulation panel including an outer sheath having an airtight property, and a molded product having a core material; the core material containing fumed silica (A) and fumed silica with a binder (A'), which-has a binder applied to the surface of the fumed silica (A); the molded product being decompressed and encapsulated in the outer sheath; and the rigid polyurethane foam having open cells formed therein.

In the insulation panel according to the present invention, it is preferred that the vacuum insulation panel have all sides brought into contact with the rigid polyurethane foam.

It is also preferred that the rigid polyurethane foam have a box core density of at most 30 kg/m³.

It is also preferred that the rigid polyurethane foam have an open cell ratio of at least 70%.

Further, the rigid polyurethane foam is preferably a rigid polyurethane foam obtainable by reacting the following polyether polyol (P) and a polyisocyanate compound in the presence of a blowing agent containing water, a flame retardant, a foam stabilizer and a urethane-forming catalyst.

Polyether polyol (P): a polyether polyol containing a polyether polyol (P1) having from 2 to 8 hydroxyl groups, having a hydroxyl value of from 10 to 100 mgKOH/g, containing oxyethylene groups and oxypropylene groups, and having a proportion of oxyethylene groups being from 5 to 60 mass% based on all the oxyalkylene groups, and a polyether polyol (P2) having from 3 to 8 hydroxyl groups and having a hydroxyl value of from 200 to 700 mgKOH/g.

It is also preferred that the fumed silica (A) have a specific surface area of from 50 to 400 m²/g.

It is also preferred that the binder be made of sodium silicate.

It is also preferred that the core material contains particles made of porous silicate and having a specific surface area of from 100 to 800 m²/g (B).

It is also preferred that the molded product have a density of from 0.1 to 0.4 g/cm³.

It is also preferred that the outer sheath be a bag made of a gas barrier film.

It is also preferred that the insulation panel according to the present invention be utilized as an insulation panel for a vehicle.

The process for manufacturing the insulation panel according to the present invention is a process for fixing the vacuum insulation panel in a mold, followed by filling a liquid mixture around the vacuum insulation panel in the mold to form a rigid polyurethane foam having open cells formed therein, the liquid mixture containing a polyether polyol, a polyisocyanate compound, a blowing agent and a foam stabilizer.

The process for performing thermal insulation according to the present invention is a process for mounting the insulation panel according the present invention to a mounting surface.

Specifically, the process for performing thermal insulation according to the present invention is a process including the following steps (I) and (II):
(I) a step of supplying a liquid mixture to a mounting surface to form a rigid polyurethane foam having open cells formed therein, the liquid mixture containing a polyether polyol, a polyisocyanate compound, a blowing agent and a foam stabilizer;
(II) a step of placing the vacuum insulation panel such that the vacuum insulation panel has one side brought into contact with the rigid polyurethane foam.

### ADVANTAGEOUS EFFECTS OF INVENTION

By utilizing the insulation panel according to the present invention, it is possible to obtain an excellent thermal insulating property, even in, e.g. a case where a space for filling an insulation panel is limited.

In accordance with the process for manufacturing the insulation panel according to the present invention, it is possible to provide an insulation panel which is capable of exhibiting an excellent thermal insulating property, even in, e.g. a case where a space for filling an insulation panel is limited.

In accordance with the process for performing thermal insulation according to the present invention, it is possible to achieve an excellent thermal insulating property, even in, e.g. a case where a space for filling an insulation panel is limited.

### BRIEF DESCRIPTION OF DRAWINGS

Fig. 1 is a. cross-sectional view showing a typical example of the insulation panel according the present invention.
Fig. 2 is an enlarged cross-sectional view showing a typical example of the molded product of a vacuum insulation panel in the insulation panel according to the present invention.
Fig. 3 is an enlarged cross-sectional view showing another typical example of the molded product of a vacuum insulation panel in the insulation panel according to the present invention.
Fig. 4 is a cross-sectional view showing a typical example of the vacuum insulation panel employed in the insulation panel according to the present invention.
Fig. 5 is a cross-sectional view showing a typical example of the process for manufacturing the insulation panel according to the present invention.
Fig. 6 is a cross-sectional view showing another example of the vacuum insulation panel in the insulation panel according to the present invention.
Fig. 7 is a cross-sectional view showing another typical example of the insulation panel according the present invention.
Fig. 8 is a cross-sectional view showing another typical example of the insulation panel according the present invention.
Fig. 9 is a cross-sectional view showing a typical example of the process for performing thermal insulation according to the present invention.

### DESCRIPTION OF EMBODIMENTS

### <Insulation panel>

The insulation panel according to the present invention includes a vacuum insulation panel and a rigid polyurethane foam brought into contact with at least one side of the vacuum insulation panel.

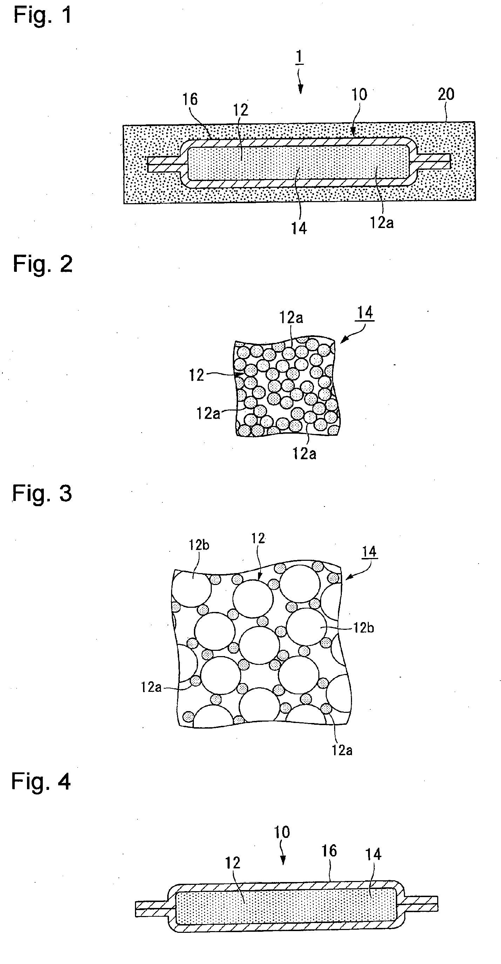

The insulation panel according to the present invention may, for example, be an insulation panel 1 as exemplified in Fig. 1.

The insulation panel 1 includes a vacuum insulation panel 10 and a rigid polyurethane foam 20 such that the vacuum insulation panel 10 is embedded in the rigid polyurethane foam 20. In the insulation panel 1, the vacuum insulation panel 10 has all sides brought into contact with the rigid polyurethane foam 20.

### [Vacuum insulation panel]

The vacuum insulation panel 10 includes an outer sheath 16 having an airtight property, and a molded product 14 having a core material 12 molded to form the molded product, the core material containing fumed silica with a binder (A') 12a, which includes particles of fumed silica (A) and a binder applied to surfaces thereof. The vacuum insulation panel 10 is an insulation panel wherein the molded product 14 is decompressed and encapsulated in the outer sheath 16.

### <Molded Product>

The core material 12 in the molded product 14 of the vacuum insulation panel 10 may be made of only the fumed silica with a binder (A') 12a as shown in Fig. 2 or be made of a mixture of the fumed silica with a binder (A') 12a and porous silica (B) 12b as shown in Fig. 3.

The molded product 14 is preferably a molded product prepared by molding the core material 12 containing the fumed silica with a binder (A') 12a and the porous silica (B) 12b from the point of view of obtaining a more excellent insulating property.

In the present invention, the core material means a particle material which is employed for molding the molded product in the vacuum insulation panel and is to be molded in a desired shape.

The molded product 14 of the vacuum insulation panel 10 is formed such that particles of the core material 12 are bonded together by the binder on particles of the fumed silica with a binder (A') 12a.

When the core material 12 is made of only the fumed silica with a binder (A') 12a as shown in Fig. 2, the particles of the fumed silica with a binder (A') 12a are bonded together by the binder applied to the surfaces of the particles of the fumed silica (A). When the core material 12 is made of a combination of the fumed silica with a binder (A') 12a and the porous silica (B) 12b as shown in Fig. 3, the particles of the fumed silica with a binder (A') 12a and the particles of the porous silica (B) 12b are bonded together by the binder existing on the surfaces of the particles of the fumed silica with a binder (A') 12a.

Even if a binder is applied to particles of the porous silica (B), it is difficult to form the molded product by mutual bonding among the particles of the porous silica (B) only, because the binder is absorbed in the porous silica (B). As shown in Fig. 3, the particles of the porous silica (B) 12b are bonded together because the particles of the fumed silica with a binder (A') 12a are interposed therebetween.

The fumed silica (A) employed in the fumed silica with a binder (A') 12a is made of fine silica particles as primary particles, which are amorphous and spherical and are free of micropores. The fumed silica (A) may, for example, be obtained by a process for evaporating silicon tetrachloride and carrying out evaporated gas phase reaction in hydrogen flame having a high temperature.

Because the fumed silica (A) is extremely fine powder, its specific surface area is normally employed as the index representing the size of the particles.

The fumed silica (A) has a specific surface area of preferably from 50 to 400 m²/g, more preferably from 100 to 350 m²/g and particularly preferably from 200 to 300 m²/g. When the specific surface area of the fumed silica (A) is at least the lower limit, it is easy to obtain an excellent insulating property. When the specific surface area of the fumed silica (A) is at most the upper limit, it is easy to apply a binder to the surfaces of the particles, with the result that it is easy to prevent the particles of the fumed silica with a binder (A') from scattering during decompression and encapsulation of the molded product.

In the present invention, the specific surface area may be measured by a nitrogen adsorption method (BET method).

Specific examples of the fumed silica (A) include products commercially available under the trademarks of AEROSIL 200 (primary average particle size: 12 nm, specific surface area: 200 m²/g, manufactured by NIPPON AEROSIL CO., LTD.) and AEROSIL 300 (primary average particle size: 7 nm, specific surface area: 300 m²/g, manufactured by NIPPON AEROSIL CO., LTD.).

The fumed silica (A) may be made of only one kind of fumed silica or a combination of at least two kinds of fumed silica.

The binder may be an organic binder or an inorganic binder. Among them, the binder is preferably an inorganic binder from the point of view that such an inorganic binder has a low thermal conductivity and is capable of easily obtaining an excellent insulating property.

Examples of the inorganic binder include sodium silicate, aluminum phosphate, magnesium sulfate and magnesium chloride. Among them, sodium silicate is particularly preferred from the point of view that it is capable of easily obtaining an excellent insulating property.

The binder may be made of only one kind of binder material or a combination of at least two kinds of binder materials.

There is no particular limitation to the method for producing the fumed silica with a binder (A') 12a, one example of which is a method for applying a binder liquid to particles of the fumed silica (A). After the binder liquid is applied to the particles of the fumed silica (A), they may be blended by, e.g. a blender.

The method for applying the binder liquid may be carried out by, e.g. spray coating.

The solvent in the binder liquid applied to the particles of the fumed silica (A) is evaporated before molding. By this treatment, the binder that exists on the particles of the fumed silica with the binder (A') 12a can develop excellent adhesiveness. The solvent may be evaporated by heating.

There is no particular limitation to the solvent used for the binder liquid. Examples of the solvent include water and ethanol.

The ratio of the binder in the binder liquid is preferably from 3 to 30 mass%, more preferably from 4 to 20 mass%. When the ratio of the binder is within any one of these ranges, it is easy to apply the binder to the fumed silica (A). The binder liquid is particularly preferably water glass that is a sodium silicate aqueous solution.

In the core material, the fumed silica (A) preferably contains porous silica (B) for the reason described later. When the porous silica (B) is contained, the binder liquid is particularly preferably water glass that is a sodium silicate aqueous solution.

The ratio of the binder in the fumed silica with a binder (A') 12a is preferably from 1 to 30 mass%, more preferably from 2 to 20 mass%, particularly preferably from 3 to 15 mass% when the amount of the fumed silica with the binder (A') is presumed to be 100 mass%.

When the porous silica (B) is employed, the ratio of the binder in the fumed silica with the binder (A') 12a is preferably from 1 to 30 mass%, more preferably from 2 to 20 mass%, particularly preferably from 3 to 15 mass% when the total amount of the fumed silica (A), the porous silica (B) and the binder is presumed to be 100 mass%.

When the ratio of the binder is at least the lower limit, it is possible to decrease the density of the fumed silica with the binder (A') in a molded product and to obtain an excellent insulating property because the molded product can be molded under a lower pressure. When the ratio of the binder is at most the upper limit, it is possible to prevent the insulating property from being reduced due to an excessive increase in the amount of the binder.

The fumed silica with the binder (A') 12a may be made of only one kind of material or a combination of at least two kinds of materials.

The porous silica (B) 12b has a specific surface area of preferably from 100 to 800 m²/g, more preferably from 200 to 750 m²/g, particularly preferably from 300 to 700 m²/g. When the specific surface area of the porous silica (B) 12b is at least the lower limit, it is easy to obtain an excellent insulating property. When the specific surface area of the porous silica (B) 12b is at most the upper limit, it is possible to reduce the amount of the binder absorbed in the porous silica (B) 12b with the result that a molded product can be molded under a lower pressure even when the added amount of the binder is small. Thus, the molded product can have a reduced density, being provided with an excellent insulating property.

The porous silica (B) 12b has a porosity of preferably from 60 to 90%, more preferably from 65 to 85%, particularly preferably from 70 to 80%. When the porosity of the porous silica (B) 12b is at least the lower limit, it is easy to obtain an excellent insulating property because it is possible to reduce the thermal conductivity of the solid. When the porosity of the porous silica (B) 12b is at most the upper limit, it is easy to obtain an excellent insulating property because porous silica particles are hardly to be crushed during pressure application with the result that the porous silica particles can maintain porosity.

The porosity may be measured by a nitrogen adsorption method (BET method).

The porous silica (B) 12b has an average particle size of preferably from 1 to 20 µm, more preferably from 2 to 15 µm, particularly preferably from 3 to 10 µm. When the average particle size of the porous silica (B) 12b is at least the lower limit, it is easy not only to provide the porous silica with a high porosity but also to obtain an excellent insulating property. When the average particle size of the porous silica (B) 12b is at most the upper limit, it is easy to obtain an excellent insulating property because a molded product that is obtained by blending the porous silica and the fumed silica with a binder (A') 12a can be prevented from having an excessively high density.

The average particle size may be measured by, e.g. a laser diffraction scattering method, electron microscopic observation.

The porous silica (B) 12b may be made of only one kind of material or a combination of at least two kinds of materials.

When the core material 12 contains a component other than the fumed silica with a binder (A') 12a, the content of the fumed silica with a binder (A') 12a in the core material (having 100 mass%) is preferably from 16 to 89 mass%, more preferably from 24 to 79 mass%, particularly preferably from 32 to 69 mass%. When the content is within any one of these ranges, it is possible to obtain an excellent insulating property.

When the core material 12 is made of a mixture of the fumed silica with a binder (A') 12a and the porous silica (B) 12b, the mass ratio of the fumed silica with a binder (A') 12a to the porous silica (B) 12b is preferably from 20/80 to 90/10, more preferably from 30/70 to 80/20, particularly preferably from 40/60 to 70/30, on the basis of the mass ratio A/B of the fumed silica (A) to the porous silica (B) before application of the binder. When the mass ratio A/B is within any one of these ranges, the binder can be helpful to prevent handling performance from being reduced in order to obtain a molded product having a low density and to provide a molded product with an excellent insulating property even when the molded product is molded under a low pressure.

The core material 12 may contain at least one additive (C) selected from the group consisting of graphite, carbon black, a titanium oxide and potassium titanate. Thus, it is possible to obtain a vacuum insulation panel having a more excellent insulating property.

When the core material 12 contains an additive (C), the total content of the fumed silica with a binder (A') 12a and the porous silica (B) 12b in the core material 12 (having 100 mass%) is preferably from 80 to 99 mass%, more preferably from 85 to 98 mass%, particularly preferably from 90 to 95 mass%. When the total content is within any one of these ranges, it is possible to obtain an excellent insulating property.

When the core material 12 contains an additive (C), the content of the additive (C) in the core material 12 (having 100 mass%) is preferably from 1 to 20 mass%, more preferably from 2 to 15 mass%, particularly preferably from 5 to 10 mass%. When the content is within any one of these ranges, it is easy to obtain an excellent insulating property.

When the core material 12 contains an additive (C), the mass ratio C/(A'+ B) of the additive (C) to the total content of the fumed silica with a binder (A') 12a and the porous silica (B) 12b in the core material 12 is preferably from 0.01 to 0.25, more preferably from 0.02 to 0.18, particularly preferably from 0.05 to 0.11. When the mass ratio C/(A'+ B) is within any one of these ranges, it is easy to obtain an excellent insulating property.

The molded product 14 has a density of preferably from 0.1 to 0.4 g/cm³, more preferably from 0.15 to 0.3 g/cm³. When the density of the molded product 14 is at least the lower limit, it is possible to have easy handleability of the molded product, and the core material is hardly to scatter when being decompressed and encapsulated. When the density of the molded product 14 is at most the upper limit, it is easy to stably obtain an excellent insulating property.

### [Outer sheath]

It is sufficient that the outer sheath 16 has airtightness and can decompress and encapsulate the molded product 14. Examples of the outer sheath 16 include a sheath made of a gas barrier film and another sheath. As the gas barrier film, any known gas barrier film employed in vacuum insulation panels may be employed without limitation.

There are no particular limitations to the size and the shape of the outer sheath 16, which may be properly determined to comply with the size and the shape of a desired vacuum insulation panel 10.

The outer sheath 16 in the vacuum insulation panel 10 has a degree of decompression of preferably at most 1 × 10³ Pa, more preferably at most 1 × 10² Pa therein from a point of view of obtaining an excellent insulating property and providing the vacuum insulation panel 10 with a longer service life. The degree of decompression in the outer sheath 16 is preferably at least 1 Pa, more preferably at least 10 Pa from the point of view of easy decompression in the outer sheath.

### [Process for manufacturing vacuum insulation panel]

As the process for manufacturing the vacuum insulation panel 10, process (α) may, for example, be mentioned which pressurizes the core material 12 as it is to form the molded product 14, and decompresses and encapsulates, in the outer sheath 16, the obtained molded product 14 as it is. Process (α) includes the following step (X1) and step (X2):
(X1) Step of pressurizing the core material 12 under a pressure of at most 1 × 10⁶ Pa as it is to form the molded product 14, the core material containing the fumed silica with a binder (A') 12a, which includes particles of the fumed silica (A) and the binder applied to surfaces thereof, as shown in Figs. 2 and 3; and
(X2) Step of obtaining the vacuum insulation product 10 by decompressing and encapsulating, in the outer sheath 16, the molded product 14 as it is as shown in Fig. 4.

Examples of the method for blending the fumed silica with a binder (A') 12a along with the porous silica (B) 12b or the additive (C) as required include a method using a V type blender and a method using a blender with a stirrer. Among them, the blending method is preferably a method using a high speed stirring device, such as a blender with a stirrer, in order to carrying out the blending operation with good dispersibility.

Although the porous silica (B) 12b may be blended before the binder is applied to the surfaces of particles of the fumed silica (A), it is preferred that the binder be applied to the surface of the particles of the fumed silica (A) to obtain the fumed silica with a binder (A') 12a, followed by carrying out the blending operation. By this arrangement, the binder cannot be absorbed in the porous silica (B) 12b, thereby to control the waste of the binder. It is also possible to prevent the porosity of the porous silica (B) 12b from being reduced.

The blending of the additive (C) may be carried out after the binder is applied to the surfaces of the particles of the fumed silica (A) to obtain the fumed silica with a binder (A') 12a, or before the binder is applied to the surfaces of the particles of the fumed silica (A).

There is no particular limitation to the method for molding the core material 12, one example of which is a method using a mold. A specific example is a method for placing the core material 12 directly in a mold and molding the core material 12.

The pressure applied for molding the core material 12 is set at at most 1 × 10⁶ Pa. It is possible to easily provide the molded product 14 with a sufficient strength by application of even a pressure of at most 1 × 10⁶ Pa because particles of the core material 12 are bonded together by the bonding force of the binder existing on the surfaces of the particles of the fumed silica with a binder (A') 12a in step (X1). Further, by carrying out the molding operation by application of a pressure of at most 1 × 10⁶ Pa, the core material 12 in the formed molded product 14 is prevented from having an excessively high density. Accordingly, the thermal conduction through the core material 12 is reduced to obtain an excellent insulating property.

The pressure applied when the core material 12 is pressurized and molded is preferably at most 1×10⁶ Pa, more preferably at most 0.5×10⁶ Pa from the point of view that it is possible to obtain a molded product having a high strength and difficult to collapse in shape and that the core material is hardly to scatter when being decompressed and encapsulated.

It is preferred that after the core material 12 is pressurized and molded to obtain the molded product 14, the molded product 14 be dried. By carrying out the drying operation after molding, the core material 12 is more firmly bonded together by the binder existing on the surfaces of the particles of the fumed silica with a binder (A') 12a. Examples of the method for drying the molded product 14 include a method for carrying out heating by using a dryer having a constant drying temperature and a method for heating by using an electric furnace.

The drying temperature is preferably from 80 to 150°C, more preferably from 100 to 120°C.

The drying time is preferably from 12 to 120 hours, more preferably from 24 to 60 hours, although varying on the drying temperature.

In process (α), the molded product 14 may be heated at a temperature of from 300 to 600°C for 1 to 24 hours after molding. By this operation, it is possible to more reliably reduce the moisture remaining in the pores of the porous silica (B) 12b.

### [Rigid polyurethane foam]

The rigid polyurethane foam 20 has open cells formed therein.

The rigid polyurethane foam 20 is preferably a rigid polyurethane foam obtainable by reacting the following polyether polyol (P) and a polyisocyanate compound in the presence of a blowing agent containing water, a flame retardant, a foam stabilizer and a urethane-forming catalyst.

The process for manufacturing the rigid polyurethane foam 20 according to the present invention may employ a different compounding agent from the above-mentioned compounding agents.

Now, the respective components will be described in detail.

### [Polyether polyol (P)]

The polyether polyol (P) contains the following polyether polyol (P1) and polyether polyol (P2).

Polyether polyol (P1): a polyether polyol having from 2 to 8 hydroxyl groups, having a hydroxyl value of from 10 to 100 mgKOH/g, containing oxyethylene groups and oxypropylene groups, and having a proportion of oxyethylene groups being from 5 to 60 mass% based on all the oxyalkylene groups.

Polyether polyol (P2): a polyether polyol having from 3 to 8 hydroxyl groups and having a hydroxyl value of from 200 to 700 mgKOH/g.

### (Polyether polyol (P1))

The polyether polyol (P1) has from 2 to 8 hydroxyl groups. That is, the polyether polyol (P1) is obtainable by subjecting an alkylene oxide (hereinafter referred to as "AO") to ring-opening addition polymerization to an initiator (S1) having from 2 to 8 functional groups. The number of functional groups in the initiator in the present invention means the number of groups having active hydrogen atoms in the initiator.

The polyether polyol (P1) has from 2 to 8, preferably from 2 to 6, particularly preferably from 2 to 4 hydroxyl groups. When the number of hydroxyl groups is at least the lower limit value, the strength of the rigid polyurethane foam 20 will be good. When the number of hydroxyl groups in the polyether polyol (P1) is at most the upper limit value, the viscosity of the polyether polyol (P1) will not be too high, and the mixing performance of the polyether polyol (P1) and a polyol system liquid is likely to be secured.

The initiator (S1) may, for example, be water, a polyhydric alcohol or an amine compound.

The polyhydric alcohol may, for example, be specifically ethylene glycol, propylene glycol, glycerin, trimethylolpropane, diethylene glycol, diglycerin, pentaerythritol, sorbitol or sucrose.

The amine compound may, for example, be an aliphatic amine, an alicyclic amine or an aromatic amine.

The aliphatic amine may, for example, be an alkylamine such as ethylenediamine, hexamethylenediamine or diethylenetriamine, or an alkanolamine such as monoethanolamine, diethanolamine or triethanolamine.

The alicyclic amine may, for example, be aminoethylpiperazine.

The aromatic amine may, for example, be diaminotoluene or a Mannich reaction product.

The Mannich reaction product is a reaction product of a phenol, an alkanolamine and an aldehyde, and may, for example, be a reaction product of nonylphenol, monoethanolamine and formaldehyde.

As the initiator (S1), one type may be used, or two or more types may be used.

The initiator (S1) is preferably, in view of excellent storage stability, water or a polyhydric alcohol, particularly preferably at least one member selected from the group consisting of water, ethylene glycol, propylene glycol, glycerin, trimethylolpropane, diglycerin, pentaerythritol, sorbitol and sucrose.

The polyether polyol (P1) has a block polymer chain or random polymer chain of oxyethylene groups and oxypropylene groups. The block polymer chain or random polymer chain of the polyether polyol (P1) may have oxyalkylene groups other than the oxyethylene groups and the oxypropylene groups. An AO forming such other oxyalkylene groups may, for example, be 1,2-epoxybutane, 2,3-epoxybutane or styrene oxide.

As a method for introducing the random polymer chain into the polyether polyol (P1), with a view to suppressing shrinkage of the rigid polyurethane foam, preferred is a method (i) of subjecting a mixture of ethylene oxide (hereinafter referred to as "EO") and propylene oxide (hereinafter referred to as "PO") to ring-opening addition polymerization to the initiator (S1), a method (ii) of subjecting only PO to ring-opening addition polymerization to the initiator (S1) and then subjecting a mixture of PO and EO to ring-opening addition polymerization, or a method (iii) of subjecting only PO to ring-opening addition polymerization to the initiator (S1), then subjecting a mixture of PO and EO to ring-opening addition polymerization and further subjecting only EO to ring-opening addition polymerization. Among them, as a method for introducing the random polymer chain into the polyether polyol (P), particularly preferred is the method (iii), whereby the reactivity of the polyether polyol (P) and the polyisocyanate compound is increased.

As a method for introducing the block polymer chain into the polyether polyol (P1), particularly preferred is a method of subjecting only PO to ring-opening addition polymerization to the initiator (S1) and then subjecting EO to ring-opening addition polymerization, whereby the reactivity with the polyisocyanate compound is increased.

When the random polymer chain is introduced into the polyether polyol (P1), the proportion of a portion formed by subjecting only PO to ring-opening addition polymerization based on the entire amount (100 mass%) of the oxyalkylene chain in the polyether polyol (P1) is preferably at most 70 mass%, more preferably at most 60 mass%, particularly preferably at most 50 mass%, most preferably from 50 to 10 mass%.

When the proportion of the portion formed by subjecting only PO to ring-opening addition polymerization is at most the upper limit value, a polyol system liquid having favorable storage stability is likely to be obtained.

The proportion of the random polymer chain formed by subjecting a mixture of EO and PO to ring-opening addition polymerization based on the entire amount (100 mass%) of the oxyalkylene chain in the polyether polyol (P1) is preferably from 40 to 90 mass%, more preferably from 45 to 85 mass%. When the proportion of the random polymer chain is at least the lower limit value, shrinkage of the obtainable rigid polyurethane foam tends to be suppressed. When the proportion of the random polymer chain is at most the upper limit value, a polyol system liquid having favorable storage stability is likely to be obtained.

In the polyether polyol (P1) (100 mass%), the proportion of a portion formed by subjecting only EO to ring-opening addition polymerization at the final stage in the method (iii) is preferably at most 20 mass%, more preferably at most 15 mass%, particularly preferably at most 10 mass%, most preferably from 5 to 10 mass%.

When the proportion of the portion formed by subjecting only EO to ring-opening addition polymerization is within the above range, the activity of the polyether polyol (P1) will not be too high, a rigid polyurethane foam having open cells is likely to be formed, and excellent thermal insulating properties tend to be obtained.

Here, the proportion of the portion formed by subjecting only EO to ring-opening addition polymerization at the final stage in the polyether polyol (P1) is a proportion of the mass of EO subjected to ring-opening addition polymerization at the final stage based on the entire mass of the initiator (S1) and all the AOs added thereto.

The proportion of oxyethylene groups based on all the oxyalkylene groups in the polyether polyol (P1) is from 5 to 60 mass%, preferably from 5 to 55 mass%, more preferably from 5 to 50 mass%, particularly preferably from 7 to 45 mass%. When the proportion of oxyethylene groups is at least the lower limit value, a polyol system liquid having favorable storage stability is likely to be obtained. When the proportion of oxyethylene groups is at most the upper limit value, the activity of the polyether polyol (P1) will not be too high, sufficient open cells will be formed, the obtainable foam will not undergo shrinkage, and a favorable rigid polyurethane foam will be obtained.

The hydroxyl value of the polyether polyol (P1) is from 10 to 100 mgKOH/g, preferably from 20 to 80 mgKOH/g, more preferably from 20 to 70 mgKOH/g, particularly preferably from 25 to 70 mgKOH/g. When the hydroxyl value of the polyether polyol (P1) is at least the lower limit value, the viscosity of the polyether polyol (P1) will not be too high. When the hydroxyl value of the polyether polyol (P1) is at most the upper limit value, the resin-forming reaction rate will be proper. Thus, a gas generated during the urethane-forming reaction can be sealed in cells constituting the foam before it is discharged to the outside of the foam, and weight saving of the obtainable rigid foam tends to be achieved.

The reaction of subjecting the AO to ring-opening addition polymerization to the initiator (S1) is carried out preferably in the presence of a catalyst.

The catalyst is preferably at least one member selected from the group consisting of a double metal cyanide complex catalyst, a Lewis acid catalyst and an alkali metal catalyst. It is preferred to use only one type of the catalyst.

The double metal cyanide complex catalyst is preferably a double metal cyanide complex catalyst having an organic ligand coordinated to zinc hexacyanocobaltate. The organic ligand may, for example, be tert-butanol, tert-pentyl alcohol, ethylene glycol mono-tert-butyl ether or a combination of tert-butanol and ethylene glycol mono-tert-butyl ether.

The Lewis acid catalyst may, for example, be a BF₃ complex, tris(pentafluorophenyl)borane or tris(pentafluorophenyl)aluminum.

The alkali metal catalyst may be an alkali metal compound such as cesium hydroxide, potassium hydroxide or sodium hydroxide, and is preferably potassium hydroxide.

The catalyst is particularly preferably potassium hydroxide.

The polyether polyol (P1) is preferably at least one member selected from the group consisting of a polyether polyol (P11) having a hydroxyl value of from 10 to 100 mgKOH/g, obtainable by subjecting PO to ring-opening addition polymerization to the initiator (S1) having from 2 to 8 functional groups in the presence of potassium hydroxide catalyst and then subjecting a mixture of PO and EO to ring-opening addition polymerization randomly, and a polyether polyol (P12) having a hydroxyl value of from 10 to 100 mgKOH/g, obtainable by subjecting PO to ring-opening addition polymerization to the initiator (S1) having from 2 to 8 functional groups in the presence of potassium hydroxide catalyst, subsequently subjecting a mixture of PO and EO to ring-opening addition polymerization randomly and further subjecting EO to ring-opening addition polymerization.

### (Polyether polyol (P2))

The polyether polyol (P2) has from 3 to 8, preferably from 3 to 6 hydroxyl groups.

The polyether polyol (P2) is obtained by subjecting an AO to ring-opening addition polymerization to an initiator (S2) having from 3 to 8 functional groups. The initiator (S2) may be an initiator having from 3 to 8 hydroxyl groups among the initiators exemplified as the initiator (S1). As the initiator (S2), one type may be used alone, or two or more types may be used.

The hydroxyl value of the polyether polyol (P2) is from 200 to 700 mgKOH/g, preferably from 210 to 650 mgKOH/g, particularly preferably from 220 to 600 mgKOH/g. When the hydroxyl value of the polyether polyol (P2) is at least the lower limit value, a rigid polyurethane foam having open cells will be obtained. When the hydroxyl value of the polyether polyol (P2) is at most the upper limit value, the viscosity of the obtainable polyether polyol (P2) will not be too high.

The reaction of subjecting an AO to ring-opening addition polymerization to the initiator (S2) is carried out preferably in the presence of a catalyst, in the same manner as in the case of the polyether polyol (P1).

The catalyst is preferably at least one member selected from the group consisting of a double metal cyanide complex catalyst, a Lewis acid catalyst and an alkali metal catalyst, whereby the AO will be uniformly added. It is preferred to use only one type of the catalyst.

The catalyst is particularly preferably potassium hydroxide.

The polyether polyol (P2) is preferably a polyoxypropylene polyol, whereby a rigid polyurethane foam having open cells is likely to be obtained.

The polyether polyol (P2) is more preferably a polyoxypropylene polyol (P21) having a hydroxyl value of from 200 to 700 mgKOH/g, obtainable by subjecting only PO to ring-opening addition polymerization to the initiator (S2) having from 3 to 8 functional groups in the presence of potassium hydroxide catalyst.

### (Polyether polyol (P3))

The polyether polyol (P) may further contain the following polyether polyol (P3) in addition to the above polyether polyol (P1) and polyether polyol (P2).

The polyether polyol (P3) is preferably a polyether polyol having from 2 to 8, preferably from 3 to 6 hydroxyl groups, having a hydroxyl value of higher than 100 mgKOH/g and less than 200 mgKOH/g, and having a polyoxyalkylene block chain with terminals being a polyoxyethylene block chain.

The polyether polyol (P3) is obtainable by subjecting an AO to ring-opening addition polymerization in a block to a initiator (S3) having from 2 to 8 functional groups.

The initiator (S3) may be the same initiator as mentioned for the initiator (S1), and preferred embodiments are also the same.

By the polyether polyol (P) containing the polyether polyol (P3), the obtainable foam tends to have a more favorable outer appearance.

The proportion of oxyethylene groups based on all the oxyalkylene groups in the polyether polyol (P3) is preferably from 5 to 60 mass%, more preferably from 7 to 50 mass%, particularly preferably from 9 to 40 mass%. When the proportion of oxyethylene groups is at least the lower limit value, coarsening of cells in the obtainable rigid polyurethane foam tends to be suppressed. When the proportion of oxyethylene groups is at most the upper limit value, the activity of the polyether polyol (P1) will not be too high, and shrinkage of the foam hardly occurs.

The hydroxyl value of the polyether polyol (P3) is preferably higher than 100 mgKOH/g and at most 180 mgKOH/g, more preferably higher than 100 mgKOH/g and at most 160 mgKOH/g. When the hydroxyl value of the polyether polyol (P3) is higher than 100 mgKOH/g, the viscosity of the polyether polyol (P3) will not be too high. When the hydroxyl value of the polyether polyol (P3) is at most-the upper limit value, a rigid polyurethane foam having open cells is likely to be obtained.

The reaction of subjecting an AO to ring-opening addition polymerization to the initiator (S3) is carried out preferably in the presence of a catalyst in the same manner as in the case of the polyether polyol (P1).

The catalyst is preferabty at least one member selected from the group consisting of a double metal cyanide complex catalyst, a Lewis acid catalyst and an alkali metal catalyst. It is preferred to use only one type of the catalyst.

The catalyst is particularly preferably potassium hydroxide.

The polyether polyol (P3) is preferably a polyether polyol (P31) having a hydroxyl value of higher than 100 mgKOH/g and less than 200 mgKOH/g, obtainable by subjecting PO to ring-opening addition polymerization to the initiator (S3) having from 2 to 8 functional groups in the presence of potassium hydroxide catalyst and then subjecting EO to ring-opening addition polymerization in a ratio of from 5 to 60 mass% based on all the AOs added to the initiator (S3).

### (Composition of polyether polyol (P))

The proportion of the polyether polyol (P1) in the polyether polyol (P) (100 mass%) is preferably from 35 to 90 mass%, more preferably from 40 to 85 mass%, particularly preferably from 40 to 80 mass%. When the proportion of the polyether polyol (P1) is at least the lower limit value, a polyol system liquid having favorable storage stability is likely to be obtained even in a case where the polyol system liquid contains a large quantity of water. Further, a rigid polyurethane foam having open cells is likely to be formed, and excellent thermal insulating properties are likely to be obtained. When the proportion of the polyether polyol (P1) is at most the upper limit value, shrinkage or collapse due to insufficient cell strength hardly occurs.

The proportion of the polyether polyol (P2) in the polyether polyol (P) (100 mass%) is preferably from 1 to 60 mass%, more preferably from 15 to 60 mass%, particularly preferably from 20 to 60 mass%. When the proportion of the polyether polyol (P2) is at least the lower limit value, a polyol system liquid having favorable storage stability is likely to be obtained. Further, a rigid polyurethane foam having open cells is likely to be formed, shrinkage of the foam will not occur, and a favorable rigid polyurethane foam will be obtained. When the proportion of the polyether polyol (P2) is at most the upper limit value, the cells are less likely to be coarse.

In a case where the polyether polyol (P3) is used, the proportion of the polyether polyol (P3) in the polyether polyol (P) (100 mass%) is preferably from 1 to 20 mass%, more preferably from 3 to 15 mass%, particularly preferably from 5 to 10 mass%. When the proportion of the polyether polyol (P3) is at least the lower limit value, coarsening of the cells tends to be suppressed. When the proportion of the polyether polyol (P3) is at most the upper limit value, shrinkage or collapse due to insufficient cell strength hardly occurs.

In a case where the polyether polyol (P) consists of the two types i.e. the polyether polyol (P1) and the polyether polyol (P2), it preferably consists of from 40 to 90 mass% of the polyether polyol (P1) and from 10 to 60 mass% of the polyether polyol (P2).

Further, in a case where the polyether polyol (P) consists of three types i.e. the polyether polyol (P1), the polyether polyol (P2) and the polyether polyol (P3), it preferably consists of from 40 to 90 mass% of the polyether polyol (P1), from 9 to 59 mass% of the polyether polyol (P2) and from 1 to 20 mass% of the polyether polyol (P3).

### (Other active hydrogen-containing compound (P4))

The polyether polyol (P) may contain other active hydrogen-containing compound (P4) other than the polyether polyols (P1) to (P3) within a range not to impair the object of the present invention.

Such other active hydrogen-containing compound (P4) is a compound containing active hydrogen atoms, not included in any of the polyether polyols (P1), (P2) and (P3).

Such other active hydrogen-containing compound (P4) may, for example, be a polyol other than the polyether polyols (P1) to (P3), a polyhydric phenol, an aminated polyol or a low molecular weight alcohol.

Such other polyol may, for example, be a polyether polyol, a polyester polyol or a polycarbonate polyol.

The low molecular weight alcohol may, for example, be propylene glycol, dipropylene glycol or tripropylene glycol. Dipropylene glycol is preferred with a view to increasing hydrophilicity of the polyol.

The polyhydric phenol may, for example, be a non-condensed compound such as bisphenol A or resorcinol, a resorcinol type initial condensate formed by condensing a phenol with a formaldehyde in excess in the presence of an alkali catalyst, a benzylic type initial condensate prepared in a non-aqueous system in preparation of the resol type initial condensate, or a novolac type initial condensate formed by reacting a phenol in excess with a formaldehyde in the presence of an acid catalyst. The number average molecular weight of such an initial condensate is preferably from 200 to 10,000, more preferably from 300 to 5,000.

The phenol may, for example, be phenol, cresol, bisphenol A or resorcinol. Further, the formaldehyde may, for example, be formalin or paraformaldehyde.

The aminated polyol may, for example, be a polyether triamine having a number average molecular weight of 5,000 and an amination degree of 95%, formed by subjecting PO to ring-opening addition polymerization to glycerin, followed by amination (manufactured by Huntsman International LLC., tradename: JEFFAMINE T-5000).

The proportion of other active hydrogen-containing compound (P4) in the polyether polyol (P) (100 mass%) is preferably from 0 to 10 mass%, more preferably from 0 to 5 mass%.

### [Polyisocyanate compound]

The polyisocyanate compound is preferably an aromatic, alicyclic or aliphatic polyisocyanate having at least two isocyanate groups; a mixture of at least two such polyisocyanates; a modified polyisocyanate obtained by modifying such a polyisocyanate; or the like.

The polyisocyanate compound may, for example, be specifically a polyisocyanate such as tolylene diisocyanate (TDI), diphenylmethane diisocyanate (MDI), polymethylenepolyphenyl isocyanate (so-called crude MDI), xylylene diisocyanate (XDI), isophorone diisocyanate (IPDI) or hexamethylene diisocyanate (HDI), or its prepolymer type modified product, nurate modified product, urea modified product or carbodiimide modified product. The polyisocyanate compound is preferably TDI, MDI, crude MDI or a modified product thereof, and in view of availability and handling efficiency, particularly preferred is crude MDI.

As the polyisocyanate compound, one type may be used, or two or more types may be used.

The amount of the polyisocyanate compound to be used may be represented by 100 times the proportion of the number of isocyanate groups based on the total number of active hydrogen atoms in the polyether polyol (P) (usually this value represented by 100 times is referred to as isocyanate index). The amount of the polyisocyanate compound to be used is preferably from 10 to 100, more preferably from 20 to 100, particularly preferably from 30 to 95 by the isocyanate index. When the isocyanate index is at least the lower limit value, a rigid polyurethane foam having open cells is likely to be formed. When the isocyanate index is at most the upper limit value, weight saving of the obtainable polyurethane foam tends to be achieved.

In a case where a rigid polyurethane foam is to be produced by a spray method, the amounts of the polyisocyanate compound and the polyether polyol (P) to be used are preferably such that their volume ratio is about 1:1.

### [Blowing agent]

The blowing agent contains water. The water is not particularly limited so long as the properties of the rigid polyurethane foam 20 will not be impaired, and distilled water or deionized water may, for example, be employed.

Further, the blowing agent may contain, in addition to the water, a hydrocarbon compound, a hydrofluorocarbon (hereinafter sometimes referred to as "HFC compound"), methylene chloride, another halogenated hydrocarbon or a mixture thereof.

The hydrocarbon compound may, for example, be butane, n-pentane, isopentane, cyclopentane, hexane or cyclohexane, preferably n-pentane, isopentane or cyclopentane.

The HFC compound may, for example, be 1,1,1,2-tetrafluoroethane (HFC-134a), 1,1,1,3,3-pentafluoropropane (HFC-245fa) or 1,1,1,3,3-pentafluorobutane (HFC-365mfc).

The blowing agent used in combination with water is preferably the hydrocarbon compound or the HFC compound. The hydrocarbon compound used in combination with water is more preferably cyclopentane, isopentane, n-pentane or a mixture thereof. The HFC compound used in combination with water is more preferably HFC-134a, HFC-245fa, HFC-365mfc or a mixture thereof.

It is particularly preferred to use water alone as the blowing agent in consideration of the environment.

Either in a case where water is used alone as the blowing agent or in a case where water and one or more other blowing agents are used in combination, the amount of the water to be used is preferably from 15 to 60 parts by mass, more preferably from 15 to 50 parts by mass, particularly preferably from 20 to 50 parts by mass per 100 parts by mass of the polyether polyol (P). When the amount of the water to be used is at least the lower limit value, the rigid polyurethane foam 20 tends to be light in weight. When the amount of the water to be used is at most the upper limit value, the water and the polyether polyol (P) tend to be favorably mixed.

### [Flame retardant]

The flame retardant is preferably a phosphorus flame retardant, more preferably tricresyl phosphate (TCP), triethyl phosphate (TEP), tris((3-chloroethyl)phosphate (TCEP) or tris(β-chloropropyl)phosphate (TCPP).

The amount of the flame retardant to be used is preferably from 10 to 100 parts by mass, more preferably from 30 to 80 parts by mass, particularly preferably from 40 to 70 parts by mass per 100 parts by mass of the polyether polyol (P). When the amount of the flame retardant to be used is at least the lower limit value, a rigid polyurethane foam having favorable flame retardancy tends to be obtained. When the amount of the flame retardant to be used is at most the upper limit value, a polyol system liquid having favorable storage stability tends to be obtained.

As the flame retardant, one type may be used, or two or more types may be used.

### [Urethane-forming catalyst]

The urethane-forming catalyst is not particularly limited so long as it is a urethane-forming catalyst which accelerates the urethane-forming reaction.

The urethane-forming catalyst may, for example, be an amine catalyst such as N,N,N',N",N"-pentamethyldiethylenetriamine, bis(2-dimethylaminoethyl)ether, triethylenediamine or N,N,N',N'-tetramethylhexamethylenediamine; a reactive amine catalyst such as N,N,N'-trimethylaminoethylethanolamine; or an organic metal catalyst such as dibutyltin dilaurate.

Further, as the urethane-forming catalyst, a catalyst which promotes the trimerization reaction of an isocyanate group may be used in combination, and such a catalyst may, for example, be a metal salt of a carboxylic acid such as potassium acetate or potassium 2-ethylhexanoate.

The amount of the urethane-forming catalyst to be used is preferably from 0.1 to 30 parts by mass, more preferably from 5 to 20 parts by mass per 100 parts by mass of the polyether polyol (P). Further, in a case where the catalyst which promotes the trimerization reaction is used, the amount of the catalyst to be used is preferably from 0.1 to 30 parts by mass, more preferably from 5 to 20 mass% per 100 parts by mass of the polyether polyol (P).

As the urethane-forming catalyst, it is preferred not to use a metal catalyst but to use only an amine catalyst or a reactive amine catalyst, in view of the environmental pollution.

### [Foam stabilizer]

In the present invention, a foam stabilizer is employed to form fine cells. Examples of the foam stabilizer include a silicone-based foam stabilizer and a fluorinated compound-based foam stabilizer. In addition to a silicone-based foam stabilizer commonly employed in the manufacturing of a rigid urethane foam, a fluorinated compound-based foam stabilizer employed in the manufacturing of a flexible urethane foam having a high permeability may be employed.

The amount of the foam stabilizer may be properly determined and is preferably from 0.1 to 10 parts by mass, more preferably from 1 to 5 mass% with respect to 100 parts by mass of polyether polyol (P).

### [Another compounding agent]

In the manufacturing of the rigid urethane foam, another compounding agent may be employed in addition to the polyether polyol (P), the polyisocyanate compound, the blowing agent, the flame retardant and the catalyst.

Examples of the compounding agent include a filler, such as calcium carbonate and barium sulfate; an antioxidant, such as an oxidation inhibitor and an ultraviolet absorber; a plasticizer, a coloring agent, an antifungal agent, a foam breaker, a dispersant, and a discoloration inhibitor.

The rigid polyurethane foam 20 has a box core density of preferably at most 30 kg/m³, more preferably from 25 to 5 kg/m³, particularly preferably from 20 to 7 kg/m³. When the core density is at least the lower limit, the rigid polyurethane foam 20 is hardly susceptible to shrinkage deformation. When the core density is at most the upper limit, it is possible to minimize the amount of the used materials to reduce the cost.

The core density of the rigid polyurethane foam in the present invention is measured by a measurement method in compliance with JIS K7222.

The rigid polyurethane foam has an open-cell rate of preferably at least 70%, more preferably at least 80%, particularly preferably at least 90%. Among them, the open-cell rate is most preferred to be from 90 to 95%. When the open-cell rate is at least the lower limit, the rigid polyurethane foam is hardly susceptible to shrinkage.

The open-cell rate may be measured by a method in compliance with JIS K7138.

The insulation panel according to the present invention is especially effective to be used as an insulation panel for vehicles. Among them, the insulation panel according to the present invention is especially effective to be utilized as an automobile interior member or ceiling member or to be disposed between an automobile door trim and a door frame.

It should be noted that the application form of the insulation panel according to the present invention is not limited to the use for vehicles. For example, the insulation panel according to the present invention may be utilized in a building, such as an apartment house, an office building and a prefabricated type of refrigerated warehouse, a refrigerator and freezer.

### [Process for manufacturing insulation panel]

Now, the process for manufacturing the insulation panel 1 will be described as a typical example of the process for manufacturing the insulation panel according to the present invention. The process for manufacturing the insulation panel 1 is not limited to the manufacturing process shown below.

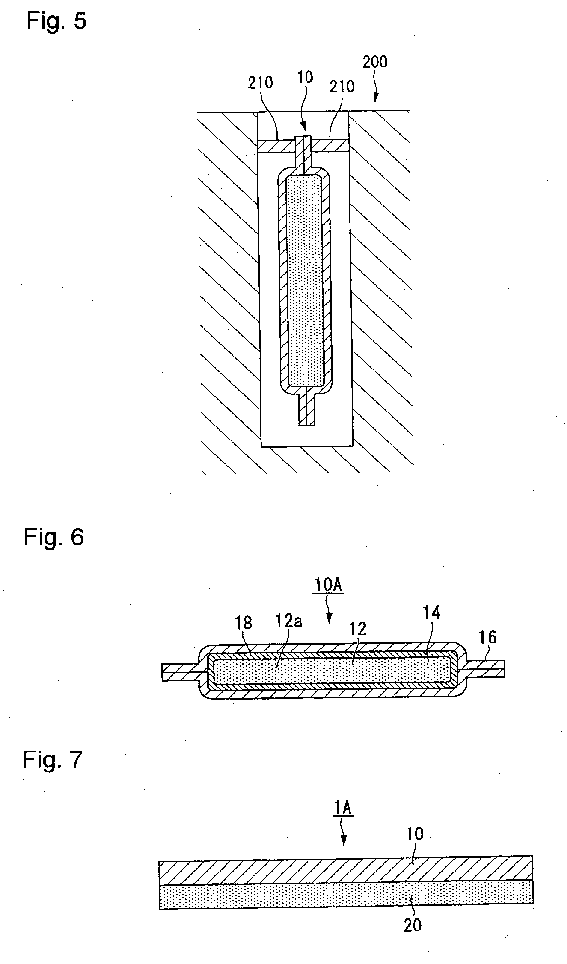

The process for manufacturing the insulation panel 1 may be, for example, a process wherein spacers 210 are utilized to fix the vacuum insulation panel 10 in a mold 200 as shown in Fig. 5, followed by filling a liquid mixture around the vacuum insulation panel 10 in the mold 200 and react the liquid mixture to form the rigid polyurethane foam 20, the liquid mixture containing polyether polyol, a polyisocyanate compound, a blowing agent and a foam stabilizer.

The polyether polyol employed in the process for manufacturing the insulation panel according to the present invention is preferably the above-mentioned polyether polyol (P). The mixture is preferred to contain a flame retardant and urethane-forming catalyst.

The insulation panel according to the present invention described above can be stably provided with an excellent insulating property because of including the vacuum insulation panel employing the core material containing fumed silica with a binder (A') and the rigid polyurethane foam having open cells formed therein.

The fumed silica (A) has a property of having a lower thermal conductivity because of having a small number of contact points between the particles when being formed as a molded product, in comparison with the other powder materials. Accordingly, it is possible to obtain an excellent insulating property by utilizing the fumed silica (A) as the core material.

In the core material containing the fumed silica with a binder (A'), the binder existing on the surfaces of particles of the fumed silica with a binder (A') can exhibit an excellent bonding force whereby the molded product can be encapsulated in the outer sheath, being sufficiently decompressed, and having the density kept at a lower level. Accordingly, it is possible to further reduce the thermal conduction through the core material and to stably obtain a more excellent insulating property. Further, the insulation panel according to the present invention can reduce the formation of heat bridges to obtain an excellent insulating property because of being capable of being mounted to a mounting surface, such as an exterior steel plate, without bringing the vacuum insulation panel into direct contact with the mounting surface.

The insulation panel according to the present invention is lightweight and is excellent in sound absorbing property because the rigid polyurethane foam has open cells formed therein.

Further, the insulation panel according to the present invention has a lot of flexibility in the structure and shape and is excellent in insulation in comparison with a case where insulation is made only by employing the vacuum insulation panel, because the rigid polyurethane foam has a high flexibility in shape.

The rigid polyurethane foam has a volume ratio of preferably from 5 to 45, more preferably from 10 to 40 when the total volume of the vacuum insulation panel and the rigid polyurethane foam is presumed to be 100.

While the vacuum insulation panels employing a fiber material, such as glass fiber, require a high vacuum condition of at most 1 Pa in order to obtain a sufficient insulating property, the vacuum insulation panel included in the insulation panel according to the present invention can obtain a similar insulating property even under a degree of decompression of about 1×10³ Pa. For this reason, when the degree of decompression in the vacuum insulation panel included in the insulation panel according to the present invention is set at at most 1 Pa equivalent to the degree of decompression in the vacuum insulation panels employing a fiber material, the insulating property is almost unchanged up to 1×10³ Pa even if the degree of decompression is decreased by deterioration over time.

### [Other embodiments]

The insulation panel according to the present invention is not limited to the above-mentioned insulation panel 1.

For example, the vacuum insulation panel included in the insulation panel according to the present invention may be a vacuum insulation panel including an inner bag. The vacuum insulation panel included in the insulation panel according to the present invention may be exemplified by a vacuum insulation panel 10A as shown as an example in Fig. 6.

The vacuum insulation panel 10A includes an outer sheath 16 having an airtight property, an inner bag 18 having permeability, and a molded product 14 having a core material 12 molded to form the molded product, the core material containing fumed silica with a binder (A') 12a, which includes particles of fumed silica (A) and a binder applied to the surfaces thereof.

The vacuum insulation panel 10A is an insulation panel where the molded product 14 is decompressed and encapsulated in the outer sheath 16, being accommodated in the inner bag 18.

The vacuum insulation panel 10A is the same as the vacuum insulation panel 10 except that the molded product 14 is vacuum-encapsulated in the outer sheath 16, being accommodated in the inner bag 18.

The parts of the vacuum insulation panel 10A identical to those of the vacuum insulation panel 10 are denoted by the same reference numerals, and explanation of those parts will be omitted.

It is sufficient that the inner bag 18 has permeability and can prevent the core material forming the molded product 14 from coming out during decompression and encapsulation. Examples of the inner bag include a bag made of a paper material and a sheath made of nonwoven fabric.

There are no particularly limitations to the size and the shape of the inner bag 18. The size and shape may be properly determined so as to comply with the size and the shape of a desired vacuum insulation panel 10A.

The vacuum insulation panel 10A may be manufactured by a similar process to the above-mentioned process (α) except that the core material 12 is pressurized to form the molded product 14, being accommodated in the inner bag.

The insulation panel according to the present invention is not limited to a mode wherein the vacuum insulation panel has all sides brought into contact with the rigid polyurethane foam. For example, the insulation panel may be an insulation panel 1A wherein the vacuum insulation panel 10 has only a single side brought into contact with the rigid polyurethane foam 20 as shown in Fig. 7. In the case of the insulation panel 1A, the insulation panel 1 A is located such that the rigid polyurethane foam 20 is brought into contact with a mounting surface, such as an exterior steel plate at the time of mounting.

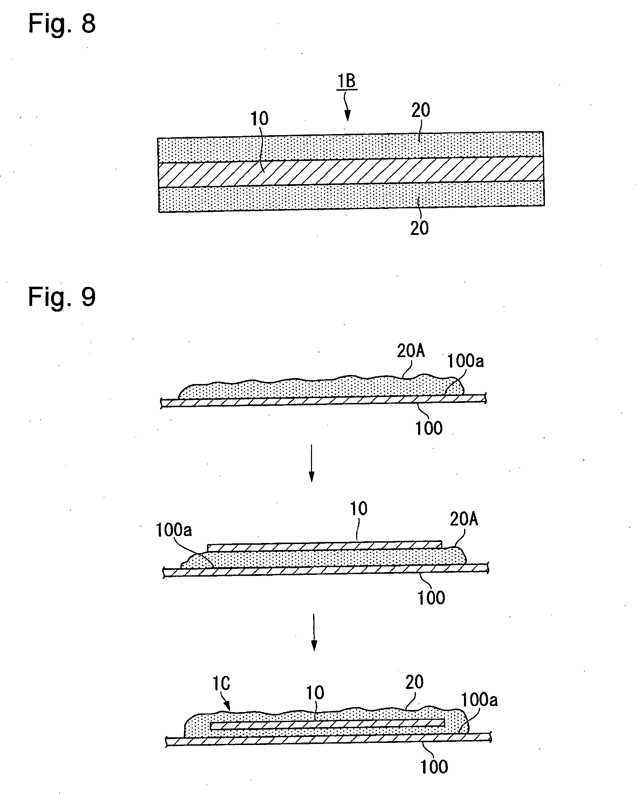

As shown in Fig. 8, the insulation panel may be an insulation panel 1 B wherein a sheet of vacuum insulation panel 10 is sandwiched between two sheets of rigid polyurethane foams 20 such that the sheet of vacuum insulation panel 10 has both opposed sides brought into contact with the sheets of the rigid polyurethane foams 20.

The insulation panel according to the present invention is preferred to be configured such that the vacuum insulation panel has all sides brought into contact with the rigid polyurethane foam as in the insulation panel 1 in terms of insulation property.

### [Process for performing thermal insulation]

As the process for performing thermal insulation according to the present invention, a process for mounting the insulation panel according to the present invention like the insulation panel 1 to a mounting surface may be mentioned for example. The insulation panel according to the present invention can be mounted to a mounting surface to provide the mounting surface with an excellent insulating property.

The process for performing thermal insulation according to the present invention is preferably a process including the following steps (I) and (II) in terms of excellent workability and high freedom in the structure of a rigid polyurethane foam to be formed:
(I) a step of supplying a liquid mixture to a mounting surface to form a rigid polyurethane foam having open cells formed therein, the liquid mixture containing polyether polyol, a polyisocyanate compound, a blowing agent and a foam stabilizer:
(II) a step of placing the above-mentioned specific vacuum insulation panel such that the vacuum insulation panel has one side brought into contact with the rigid polyurethane foam.

Now, as a specific example of the process for performing thermal insulation including steps (I) and (II), a process of employing the following steps (I) to (III) to mount an insulation panel to a mounting surface, the insulation panel having a vacuum insulation panel embedded in a rigid polyurethane foam will be described.

### [Step (I)]

As shown in Fig. 9, a liquid mixture which contains polyether polyol, a polyisocyanate compound, a blowing agent and a foam stabilizer is sprayed onto a mounting surface 100a of an exterior steel sheet 100 by a spray method to form a rigid polyurethane foam 20.

The spray method has advantages of manufacturing of a rigid polyurethane foam in a construction site, a reduction in construction cost, mounting of a rigid polyurethane foam to even an uneven mounting surface without gaps, and so on.

As the spray method, an airless spray method wherein a polyol system liquid containing polyether polyol, a blowing agent and a foam stabilizer and a polyisocyanate liquid containing a polyisocyanate compound are mixed by a mixing head, followed by foaming the mixture, is preferred for example.

### [Step (II)]

A vacuum insulation panel 10 is placed on the rigid polyurethane foam 20 such that the vacuum insulation panel 10 has one side brought into contact with the rigid polyurethane foam 20.

### [Step (III)]

The mixture is further sprayed onto the vacuum insulation panel 10 by the spray method to embed the vacuum insulation panel 10 in the rigid polyurethane foam 20 so as to form an insulation panel 1C.

As the spray method, the airless spray method is preferred as in Step (I).

The process for mounting the insulation panel according to the present invention is not limited to the process including the above-mentioned Steps (I) to (III). For example, the process may be a process wherein no rigid polyurethane foam is disposed on a side of the vacuum insulation panel opposite to the mounting surface by not carrying out Step (III).

### EXAMPLES

Now, the present invention will be described in further detail with reference to Examples. However, it should be understood that the present invention is by no means restricted thereto.

Ex. 1 and 2 are Examples of the present invention, and Ex. 3 and 4 are Comparative Examples.

### [Polyether polyol (P1)]

Polyether polyol (P1-1): in a reactor having an internal capacity of 5L, using glycerin (95 g) as the initiator, in the presence of potassium hydroxide catalyst (5 g), 1,866 g of PO was subjected to ring-opening addition polymerization (115°C, 1 hour) and then 2,702 g of a mixture of PO and EO was subjected to ring-opening addition polymerization (115°C, 1.5 hours) randomly to obtain a polyether polyol having 3 hydroxyl groups and having a hydroxyl value of 36 mgKOH/g. The proportion of EO based on the total amount of EO and PO added was 35 mass%.

Polyether polyol (P1-2): using glycerin as the initiator, PO was subjected to ring-opening addition polymerization and then EO was subjected to ring-opening addition polymerization to obtain a polyether polyol having 3 hydroxyl groups and having a hydroxyl value of 34 mgKOH/g. The proportion of EO based on the total amount of EO and PO added was 10 mass%.

### [Polyether polyol (P2)]

Polyether polyol (P2-1): using a mixture of sucrose (having 8 functional groups) and glycerin (having 3 functional groups) (in a mass ratio of 1.94:1) as the initiator, in the presence of potassium hydroxide catalyst, only PO was subjected to ring-opening addition polymerization to obtain a polyether polyol having 4.7 hydroxyl groups and having a hydroxyl value of 450 mgKOH/g.

Polyether polyol (P2-2): using ethylenediamine as the initiator, only PO was subjected to ring-opening addition polymerization to obtain a polyether polyol having 4 hydroxyl groups and having a hydroxyl value of 590 mgKOH/g.

Polyether polyol P2-3): using glycerin as the initiator, only PO was subjected to ring-opening addition polymerization to obtain a polyether polyol having 3 hydroxyl groups and having a hydroxyl value of 240 mgKOH/g.

### [Other active hydrogen-containing compound (P4)]

Other active hydrogen-containing compound (P4-1): dipropylene glycol (hydroxyl value: 836 mgKOH/g, manufactured by Asahi Glass Company, Limited).

Flame retardant Q: tris(β-chloropropyl)phosphate (tradename: FYLOL PCF, manufactured by ICL-IP JAPAN).

Blowing agent R: water

Foam stabilizer S: silicone foam stabilizer (tradename: SF2938F, manufactured by Dow Corning Toray Co., Ltd.).

Catalyst T: reactive amine catalyst (tradename: TOYOCAT-RX7, manufactured by TOSOH CORPORATION).

Polyisocyanate compound (Y-1): crude MDI, tradename: CORONATE 1130, viscosity (25°C): 120 mPa·s, NCO content: 31.2% (manufactured by Nippon Polyurethane Industry Co., Ltd.).

### [Reactivity]

The time at the initiation of mixing the polyol system liquid and the polyisocyanate compound was taken as 0 second, and the period of time until the mixed liquid started to foam was taken as a cream time (seconds), and the period of time from the start of foaming to the end of rising of the foam was taken as a rise time (seconds).

### [Box core density]

A wooden mold having dimensions of 150 mm in length, 150 mm in width and 150 mm in height and having a polyethylene mold release bag was employed to form a rigid polyurethane foam, cubes having each side of 100 mm in length were cut out of a core portion of the rigid polyurethane foam thus formed, and the density of the cubes was measured in compliance with JIS K7222.

### [Thermal conductivity]

The thermal conductivity (unit: W/m·K) was measured by a thermal conductivity tester (product name: AUTO LAMBDA HC-074 model, manufactured by EKO INSTRUMENTS) in compliance with JIS K1421.

### [Closed-cell ratio and open-cell ratio]

The open-cell ratio was measured by a method in compliance with JIS K7138.

Specifically, cubes having dimensions of 25 mm × 25 mm × 25 mm were cut out from a core portion of a rigid polyurethane foam obtained in the same manner as the measurement of the box core density, and a pair of calipers (manufactured by Mitsutoyo Corporation) was employed to measure the apparent volume of the cubes by measuring the vertical, horizontal and height dimensions of the cubes. Further, a true volume-measuring device (VM-100 model, manufactured by ESTECH Corporation) was employed to the true volume of the cubes by a gas phase substitution method. The value obtained by dividing the true volume by the apparent volume was determined as the closed-cell ratio shown in a percentage (unit: %). Further, a value obtained by subtracting the closed-cell ratio from 100% was determined as the open-cell ratio (unit: %).

### [Ex. 1 and 2]

### (Manufacturing of vacuum insulation panel)

A binder liquid, which was prepared by diluting 5.2 g of water glass having a molecular ratio of 3 with 70 g of deionized water, was spray-coated on 75 g of fumed silica (A) (product name: "AEROSIL 300", primary average particle size: 7 nm, specific surface area: 300 m²/g, manufactured by NIPPON AEROSIL CO., LTD.), and the binder liquid and the fumed silica were blended by a blender to obtain fumed silica with a binder (A').

150 g of the obtained fumed silica with a binder (A') was accommodated in an inner bag made of nonwoven fabric of polyethylene-terephthalate and was subjected to shape arrangement, and a pressure of about 0.8×10⁵ Pa was applied to the fumed silica with a binder by a press, and then the pressurized fumed silica was heated at 120°C for 48 hours to form a molded product in a plate-like shape having a length of 145 mm, a width of 145 mm and a thickness of 17 mm. The density of the molded product was 0.21 g/cm³ according to calculation based on the size and the mass of the molded product.

The molded product was accommodated in an outer sheath made of a nylon-polyethylene bag "NHP-3245" commercially available, the inside of the outer sheath was decompressed to 1 ×10² Pa, and the outer sheath was sealed in a decompressed state for encapsulation to obtain a vacuum insulation panel having a length of 220 mm, a width of 210 mm and a thickness of 18 mm in a mode exemplified in Fig. 6. The lateral edge portions of the obtained vacuum insulation panel were folded in a rectangular shape having a length of 190 mm and a width of 190 mm.

The thermal conductivity of the obtained vacuum insulation panel (unit: W/m·K) was revealed to be 0.0119 W/m·K by measurement.

### (Manufacturing of insulation panel)

A polyol system liquid was prepared by blending the respective components at the ratios shown in Table 1. The obtained polyol system liquid and a polyisocyanate liquid containing a polyisocyanate compound (Y-1) were held at a liquid temperature of 15°C, respectively, and they were stirred for 3 seconds at a rotational speed of 3,000 rpm by using a stirring device having disk-shaped stirring vanes mounted on a drilling press manufactured by Hitachi, Ltd., to prepare a mixed liquid such that the mixed liquid met the indexes shown in Table 1. Thereafter, spacers were employed to fix the vacuum insulation panel in the cavity of a mold having cavity dimensions of 200 mm in length, 200 mm in width and 200 mm in depth and fitted with a release bag made of polyethylene, and the mixed liquid was filled around the vacuum insulation panel and was foamed to obtain an insulation panel having the vacuum insulation panel embedded in the rigid polyurethane foam and having dimensions of 200 mm in length, 200 mm in width and 50 mm in thickness.

### [Ex. 3 and 4]

An insulation panel including only a rigid polyurethane foam was obtained, without employing a vacuum insulation panel, in the same manner as Ex. 1 and 2 except that only the mixed liquid was filled in the mold.

Results of the physical property evaluation for the insulation panel in each of Ex. 1 to 4 are shown in Table 1.

In Table 1, the unit of the figures representing the blending amounts is parts by mass. It should be noted that the amount of the polyisocyanate compound is represented by the polyisocyanate index.

**[Table 1]**

| | | | Ex. 1 | Ex. 2 | Ex. 3 | Ex. 4 |
|---|---|---|---|---|---|---|
| Polyol system liquid | Polyether polyol (P) | P1-1 | 70 | - | 70 | - |
| | | P1-2 | - | 40 | - | 40 |
| | | P2-1 | 30 | - | 30 | - |
| | | P2-2 | - | 30 | - | 30 |
| | | P2-3 | - | 25 | - | 25 |
| | | P4-1 | - | 5 | - | 5 |
| | Flame retardant Q | | 50 | 50 | 50 | 50 |
| | Blowing agent R | | 24.5 | 18 | 24.5 | 18 |
| | Foam stabilizer S | | 4 | 4 | 4 | 4 |
| | Catalyst T | | 7 | 6 | 7 | 6 |
| Polyisocyanate liquid | Polyisocyanate compound (Y-1) (index) | | 51.5 | 93 | 51.5 | 93 |
| Presence and absence of vacuum insulation panel | | | Presence | Presence | Absence | Absence |
| Physical property evaluation | Reactivity | Cream time [sec] | 9 | 8 | 9 | 8 |
| | | Rise time [sec] | 24 | 22 | 24 | 22 |
| | Open-cell ratio [%] | | 98 | 96 | 98 | 96 |
| | Box core density [kg/m³] | | 10.4 | 13.6 | 10.2 | 13.4 |
| | Thermal conductivity [W/m·K] | 1 hr. after foaming | 0.024 | 0.023 | 0.037 | 0.033 |
| | | 16 hrs. after foaming | 0.024 | 0.023 | 0.037 | 0.033 |
| | | 144 hrs. after foaming | 0.024 | 0.023 | 0.037 | 0.033 |

As shown in Table 1, it was revealed that the insulation panel obtained in each of Ex. 1 and 2 had a more excellent insulating property in comparison with the cases employing only the rigid polyurethane foam (having a thermal conductivity of 0.037 to 0.033 W/m·K). Although single use of a vacuum insulation panel is susceptible to lack of insulation due to the formation of gaps because only a plate-like molded product is obtained, a vacuum insulation panel can be combined with a rigid polyurethane foam to form a composite unit to reduce the occurrence of lack of insulation because the rigid polyurethane foam embeds gaps.

Further, with respect to a problem in that when a vacuum insulation panel has an end portion brought into direct contact with a metal surface and so on, the vacuum insulation panel cannot sufficiently exhibit its insulation performance because of the formation of a thermal bridge, it is possible to prevent a thermal bridge from being formed and to exhibit an excellent insulation performance because a rigid polyurethane foam is interposed between a vacuum insulation panel and a framework by configuring the vacuum insulation panel and the foam in a composite unit.

### INDUSTRIAL APPLICABILITY

The insulation panel including a vacuum insulation panel and a rigid polyurethane foam according to the present invention has an excellent insulating property even in, e.g. a case where a space for filling an insulation panel is limited, and is effective as an insulation panel in an industrial field, such as buildings, refrigerators and freezers, in particular an insulation panel for vehicles.

The entire disclosure of Japanese Patent Application No. 2012-268261 filed on December 7, 2012 including specification, claims, drawings and summary is incorporated herein by reference in its entirety.

### REFERENCE SYMBOLS

1 and 1 A to 1C: insulation panel
10 and 10A: vacuum insulation panel
12: core material
12a: fumed silica with a binder (A')
12b: porous silica (B)
14: molded product
16: outer sheath
18: inner bag
20: rigid polyurethane foam
100: exterior steel sheet
100a: mounting surface

## Claims

1. An insulation panel comprising a vacuum insulation panel and a rigid polyurethane foam brought into contact with at least one side of the vacuum insulation panel;
the vacuum insulation panel including an outer sheath having an airtight property, and a molded product having a core material, the core material containing fumed silica (A) and fumed silica with a binder (A'), which has a binder applied to the surface of the fumed silica (A), the molded product being decompressed and encapsulated in the outer sheath; and
the rigid polyurethane foam having open cells formed therein.

2. The insulation panel according to Claim 1, wherein the vacuum insulation panel has all sides brought into contact with the rigid polyurethane foam.

3. The insulation panel according to Claim 1 or 2, wherein the rigid polyurethane foam has a box core density of at most 30 kg/m³.

4. The insulation panel according to any one of Claims 1 to 3, wherein the rigid polyurethane foam has an open cell ratio of at least 70%.

5. The insulation panel according to any one of Claims 1 to 4, wherein the rigid polyurethane foam comprises a rigid polyurethane foam obtainable by reacting the following polyether polyol (P) and a polyisocyanate compound in the presence of a blowing agent containing water, a flame retardant, a foam stabilizer and a urethane-forming catalyst;
Polyether polyol (P): a polyether polyol containing a polyether polyol (P1) having from 2 to 8 hydroxyl groups, having a hydroxyl value of from 10 to 100 mgKOH/g, containing oxyethylene groups and oxypropylene groups, and having a proportion of oxyethylene groups being from 5 to 60 mass% based on all the oxyalkylene groups, and a polyether polyol (P2) having from 3 to 8 hydroxyl groups and having a hydroxyl value of from 200 to 700 mgKOH/g.

6. The insulation panel according to any one of Claims 1 to 5, wherein the fumed silica (A) has a specific surface area of from 50 to 400 m²/g.

7. The insulation panel according to any one of Claims 1 to 6, wherein the binder is made of sodium silicate.

8. The insulation panel according to any one of Claims 1 to 7, wherein the core material contains particles made of porous silicate so as to have a specific surface area of from 100 to 800 m²/g (B).

9. The insulation panel according to any one of Claims 1 to 8, wherein the molded product has a density of from 0.1 to 0.4 g/cm³.

10. The insulation panel according to any one of Claims 1 to 9, wherein the outer sheath comprises a bag made of a gas barrier film.

11. The insulation panel according to any one of Claims 1 to 10, for use in an insulation panel for a vehicle.

12. A process for manufacturing an insulation panel comprising fixing a vacuum insulation panel in a mold, followed by filling a liquid mixture around the vacuum insulation panel in the mold to form a rigid polyurethane foam having open cells formed therein, the liquid mixture containing polyether polyol, a polyisocyanate compound, a blowing agent and a foam stabilizer, and
the vacuum insulation panel comprising an outer sheath having an airtight property, and a molded product having a core material, the core material containing fumed silica (A) and fumed silica with a binder (A'), which has a binder applied to the surface of the fumed silica (A), the molded product being decompressed and encapsulated in the outer sheath.

13. A process for mounting the insulation panel defined in any one of Claims 1 to 10 to a mounting surface.

14. A process for performing thermal insulation comprising the following steps (I) and (II):
(I) a step of supplying a liquid mixture to a mounting surface to form a rigid polyurethane foam having open cells formed therein, the liquid mixture containing polyether polyol, a polyisocyanate compound, a blowing agent and a foam stabilizer; and
(II) a step of placing a vacuum insulation panel such that the vacuum insulation panel has one side brought into contact with the rigid polyurethane foam, the vacuum insulation panel comprising an outer sheath having an airtight property, and a molded product having a core material, the core material containing fumed silica (A) and fumed silica with a binder (A'), which has a binder applied to the surface of the fumed silica (A), the molded product being decompressed and encapsulated in the outer sheath.
